# EUROPEAN PATENT SPECIFICATION

(11) **EP 2 251 532 B1**
(45) Date of publication and mention of the grant of the patent: **21.05.2014**
(21) Application number: 09718882.5
(22) Date of filing: 10.03.2009
(51) Int. Cl.: F02B 23/06, F02F 3/26

(54) **DIRECT FUEL-INJECTION ENGINE**
DIREKTEINSPRITZMOTOR
MOTEUR À INJECTION DIRECTE

(30) Priority: 11.03.2008 JP 2008060557
(43) Date of publication of application: 17.11.2010
(73) Proprietor: Honda Motor Co., Ltd., Minato-ku Tokyo 107-8556 (JP)
(72) Inventor: IKEYA, Kenichiro, Wako-shi Saitama 351-0193 (JP); KATAYAMA, Goichi, Wako-shi Saitama 351-0193 (JP); UCHIMOTO, Tatsuya, Wako-shi Saitama 351-0193 (JP); KANEKO, Yoshimasa, Wako-shi Saitama 351-0193 (JP); SASAKI, Nobuhiko, Wako-shi Saitama 351-0193 (JP); YAMAYA, Yukihisa, Wako-shi Saitama 351-0193 (JP); YAMAGUCHI, Akihiro, Wako-shi Saitama 351-0193 (JP); TAJIMA, Yutaka, Wako-shi Saitama 351-0193 (JP); SONO, Hiroshi, Wako-shi Saitama 351-0193 (JP); SHIBATA, Mitsuhiro, Wako-shi Saitama 351-0193 (JP)
(74) Representative: Herzog, Markus
(86) International application number: PCT/JP2009/054503
(87) International publication number: WO 2009/113518

(56) References cited:
- JP-A- 62 255 523
- JP-A- 62 255 523
- JP-A- 62 255 524
- JP-A- 2008 038 650
- JP-A- 2008 038 650

## Description

### TECHNICAL FIELD

The present invention relates to a direct fuel-injection engine that includes a piston having a top face with a height in a piston central axis direction that varies in a circumferential direction, a cavity recessed in a central part of the top face of the piston, a lip part projecting in an annular manner from an edge of an opening of the cavity toward the piston central axis so as to reduce a diameter of the opening of the cavity, and a fuel injector for injecting fuel into the interior of the cavity.

### BACKGROUND ART

The top face of a piston of a direct fuel-injection diesel engine is generally formed as a flat face, but a direct fuel-injection diesel engine having a piston with a top face that projects in a pentroof shape is known from JP 05-17370 A below.

In this direct fuel-injection diesel engine, providing an annular lip part so as to project radially inward from the edge of the opening of the cavity recessed in the top face of the pentroof-shaped piston and making the thickness, in the piston central axis direction, of the lip part uniform in the circumferential direction prevent fuel injected into the interior of the cavity from spilling over to thus suppress the generation of HC or smoke.

JP62-255523 discloses a pentroof-shaped piston in which an annular overhung portion 7 (lip part) is projectingly provided inwardly in a radial direction from the edge of the opening of a cavity 4 recessed in the top face of a pentroof-shaped piston 1, and the thickness, in the piston central axis direction, of the overhung portion 7 is uniformed in the circumferential direction. However, the cross-sectional shape of the overhung portion 7 and the cross-sectional shape of the cavity 4 are nonuniform in the circumferential direction. Accordingly, the thermal load on the overhung portion 7 and the concentration of gas mixture within the cavity 4 become nonuniform in the circumferential direction.

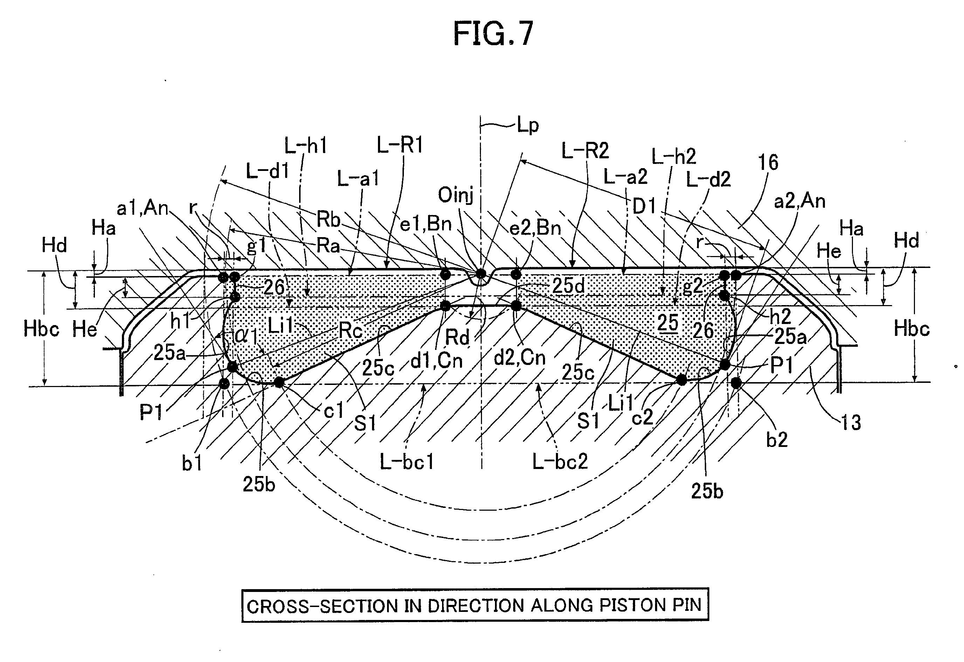

JP2008-38650 discloses a direct fuel-injection diesel engine, as a first embodiment, in which angles α and β formed by fuel injection axes Li are different from each other, the cavity 25 is divided into a plurality of areas having equal volume along the circumferential direction in accordance with the angles α and β, and the fuel injection axes Li are disposed in the respective areas, so that the fuel injection amounts along the fuel injection axes Li are set to be equal; and a direct fuel-injection diesel engine, as a second embodiment, in which the reference cross-sectional shapes of the cavity 25 (which correspond to the shapes of the shaded portions in FIGS. 7 to 9) substantially coincide with each other in a given cross-section which passes through the fuel injection point Oᵢₙⱼ and is perpendicular to the top face of the piston 13. However, the second embodiment only has the configuration in which the reference cross-sectional shapes of the cavity substantially coincide with each other in a given cross-section which passes through the fuel injection point and is perpendicular to the top face of the piston.

### DISCLOSURE OF INVENTION

### PROBLEMS TO BE SOLVED BY THE INVENTION

In the above-mentioned conventional arrangement, the thickness, in the piston central axis direction, of the lip part of the cavity is made uniform in the circumferential direction, but since the edge of the opening of the cavity of the pentroof-shaped piston changes in height in the circumferential direction in an undulating manner, the cross-sectional shape of the lip part or the cross-sectional shape of the cavity becomes nonuniform in the circumferential direction, and there is the problem that the thermal load on the lip part or the concentration of a gas mixture within the cavity becomes nonuniform in the circumferential direction.

The present invention has been accomplished in the light of the above-mentioned circumstances, and it is an object thereof to provide a direct fuel-injection engine equipped with a pentroof-shaped piston in which the thermal load of a lip part or the concentration of a gas mixture within a cavity is made as uniform as possible in the circumferential direction.

### MEANS FOR SOLVING THE PROBLEMS

In order to attain the above object, the invention provides a direct fuel-injection engine in accordance with claim 1.

According to the present invention, the direct fuel-injection engine comprises a piston having a top face with a height in a piston central axis direction that varies in a circumferential direction, a cavity recessed in a central part of the top face of the piston, a lip part projecting in an annular manner from an edge of an opening of the cavity toward the piston central axis so as to reduce a diameter of the opening of the cavity, and a fuel injector for injecting fuel into the cavity, wherein a cross-sectional shape of the lip part in a given half plane extending radially from the piston central axis is made substantially equal throughout the entire region in a circumferential direction of the lip part.

Further, according to the present invention, there is proposed a direct fuel-injection engine comprising a piston having a top face with a height in a piston central axis direction that varies in a circumferential direction, a cavity recessed in a central part of the top face of the piston, a lip part projecting in an annular manner from an edge of an opening of the cavity toward the piston central axis so as to reduce a diameter of the opening of the cavity, and a fuel injector for injecting fuel into the cavity, characterized in that the shape of an outer wall face of the lip part is set so that, with N as a whole number of 2 or more, when the lip part is divided into N virtual lip part sections by the outer wall face of the lip part and N half planes extending radially from the piston central axis and having equal included angles, volumes of the virtual lip part sections are substantially equal.

Moreover, according to the present invention, in addition to the above aspect, the shape of an inner wall face of the cavity is set so that, with N as a whole number of 2 or more, when the cavity is divided into N virtual cavity sections by the inner wall face of the cavity and N half planes extending radially from the piston central axis and having equal included angles, volumes of the virtual cavity sections are substantially equal.

Furthermore, according to the present invention, in addition to the above aspect, the fuel injector comprises a plurality of fuel injection axes spaced in the circumferential direction, a cross-section of the cavity passing through an nth fuel injection axis is defined as a fuel injection cross-section Sn, an intersection point of the fuel injection cross-section Sn with the edge of the opening of the cavity is defined as a first specific point An, a second specific point Bn is present on a line that passes through the first specific point An and is parallel to a lower face of a cylinder head in the fuel injection cross-section Sn, a third specific point Cn is present on a bottom wall portion of the cavity in the fuel injection cross-section Sn, the second specific point Bn is at a position closer to the piston central axis than the first specific point An, the third specific point Cn is at a position closer to the piston central axis than the position of the maximum outer diameter of the bottom wall portion of the cavity, a cross-sectional shape surrounded by a path AnBn connecting the first and second specific points An and Bn by a line along the lower face of the cylinder head in the fuel injection cross-section Sn, a path AnCn connecting the first and third specific points An and Cn along a wall face of the cavity in the fuel injection cross-section Sn, and a path BnCn connecting the second and third specific points Bn and Cn by the shortest straight line, which is substantially equal for each fuel injection cross-section Sn, is defined as a reference cross-sectional shape, the volume of each virtual cavity section is made substantially equal by varying the shape of the inner wall face of the cavity so that the reference cross-sectional shape enlarges for the fuel injection cross-section Sn passing through a fuel injection axis that is present in a direction where the height, in the piston central axis direction, of the top face of the piston is low, and a point g1, g2 that is spaced only by a distance r toward the second specific point Bn side from the first specific point An on the path AnBn in the fuel injection cross section Sn and a point h1, h2 that is spaced only by a distance He toward the bottom wall portion of the cavity from the point g1, g2 in a direction that is perpendicular to the path AnBn are defined, and the shape of the lip part is determined by a line segment joining the first specific point An and the point g1, g2, a line segment joining the point g1, g2 and the point h1, h2, and a curved line smoothly joining the point h1, h2 and a peripheral wall portion of the cavity.

### EFFECTS OF THE INVENTION

In accordance with the present invention, with regard to the arrangement in which the lip part projecting in an annular manner toward the piston central axis is provided at the edge of the opening of the cavity recessed in the central part of the top face of the so-called pentroof-shaped piston, since the cross-sectional shape of the lip part is made substantially equal throughout the entire region in the circumferential direction, not only is it possible to prevent by means of the lip part fuel injected via the injector from spilling over from the cavity, but it is also possible to prevent the cross-sectional shape of the cavity containing the piston central axis from varying due to the lip part being provided, thereby ensuring uniform mixing of fuel within the cavity. Furthermore, it is possible to make the thermal load applied to the lip part during combustion of a gas mixture uniform throughout the entire region in the circumferential direction to thus enhance the durability and, moreover, the speed of cooling of molten metal in the lip part during casting of the piston can be made uniform, thus improving the precision of casting.

Furthermore, in accordance with the present invention, with regard to the arrangement in which the lip part projecting in an annular manner toward the piston central axis is provided at the edge of the opening of the cavity recessed in the central part of the top face of the so-called pentroof-shaped piston, since when the lip part is divided into N virtual lip part sections by N half planes extending radially from the piston central axis and having equal included angles, the volumes of the virtual lip part sections are substantially identical, not only is it possible to prevent by means of the lip part fuel injected via the injector from spilling over from the cavity, but it is also possible to prevent the cross-sectional shape of the cavity containing the piston central axis from varying due to the lip part being provided, thereby ensuring uniform mixing of fuel within the cavity. Furthermore, it is possible to make the thermal load applied to the lip part during combustion of a gas mixture uniform throughout the entire region in the circumferential direction to thus enhance the durability and, moreover, the speed of cooling of molten metal in the lip part during casting of the piston can be made uniform, thus improving the precision of casting.

Furthermore, in accordance with the present invention, since the shape of the inner wall face of the cavity is set so that, when the cavity is divided into N virtual cavity sections by N half planes extending radially from the piston central axis and having equal included angles, the volumes of the virtual cavity sections are substantially identical, it is possible to make the conditions in which air and fuel are mixed in the cavity uniform, thereby improving the engine output and reducing harmful exhaust materials. In this arrangement, since the volumes of the virtual lip part sections are made substantially equal, it is possible to prevent the volumes of the virtual cavity sections from becoming different due to the lip part being provided.

Furthermore, in accordance with the present invention, with the cross-sectional shape of the cavity of the invention of the prior application (ref. Japanese Patent Application Laid-open No. 2008-002443) as a reference cross-sectional shape, by varying the shape of the inner wall face of the cavity so that the reference cross-sectional shape enlarges for the fuel injection cross-section Sn passing through the fuel injection axis that is present in the direction where the height of the piston top face in the piston central axis direction is lower, the virtual cavity sections are made to have substantially equal volumes, and compared with the invention of the prior application the conditions in which air and fuel are mixed in the fuel injection cross-sections Sn can therefore be made more uniform.

### BRIEF DESCRIPTION OF DRAWINGS

[FIG. 1] FIG. 1 is a vertical sectional view of an essential part of a diesel engine (first embodiment).
[FIG. 2] FIG. 2 is a view from arrowed line 2-2 in FIG. 1 (first embodiment).
[FIG. 3] FIG. 3 is a view from arrowed line 3-3 in FIG. 1 (first embodiment).
[FIG. 4] FIG. 4 is a perspective view of an upper part of a piston (first embodiment).
[FIG. 5] FIG. 5 is a sectional view along line 5-5 in FIG. 3 (first embodiment).
[FIG. 6] FIG. 6 is a sectional view along line 6-6 in FIG. 3 (first embodiment).
[FIG. 7] FIG. 7 is a sectional view along line 7-7 in FIG. 3 (first embodiment).
[FIG. 8] FIG. 8 is a view, corresponding to FIG. 5 above, showing a cross-sectional shape of a cavity after correction (first embodiment).
[FIG. 9] FIG. 9 is a view, corresponding to FIG. 6 above, showing a cross-sectional shape of a cavity after correction (first embodiment).
[FIG. 10] FIG. 10 is a view for explaining virtual cavity sections and lip part sections (first embodiment).
[FIG. 11] FIG. 11 is a graph showing percentage change in volume of the cavity section when the direction of the cavity section is varied in the circumferential direction (first embodiment).

### EXPLANATION OF REFERENCE NUMERALS AND SYMBOLS

- 13: Piston
- 23: Fuel injector
- 25: Cavity
- 25a: Peripheral wall portion
- 25c: Bottom wall portion
- 25A to 25F: Cavity sections
- 26: Lip part
- 26A to 26F: Lip part sections
- Li1: Fuel injection axis
- Li2: Fuel injection axis
- Lp: Piston central axis
- X1 to X6: Half planes

### BEST MODE FOR CARRYING OUT THE INVENTION

A mode for carrying out the present invention is explained below by reference to the attached drawings.

### FIRST EMBODIMENT

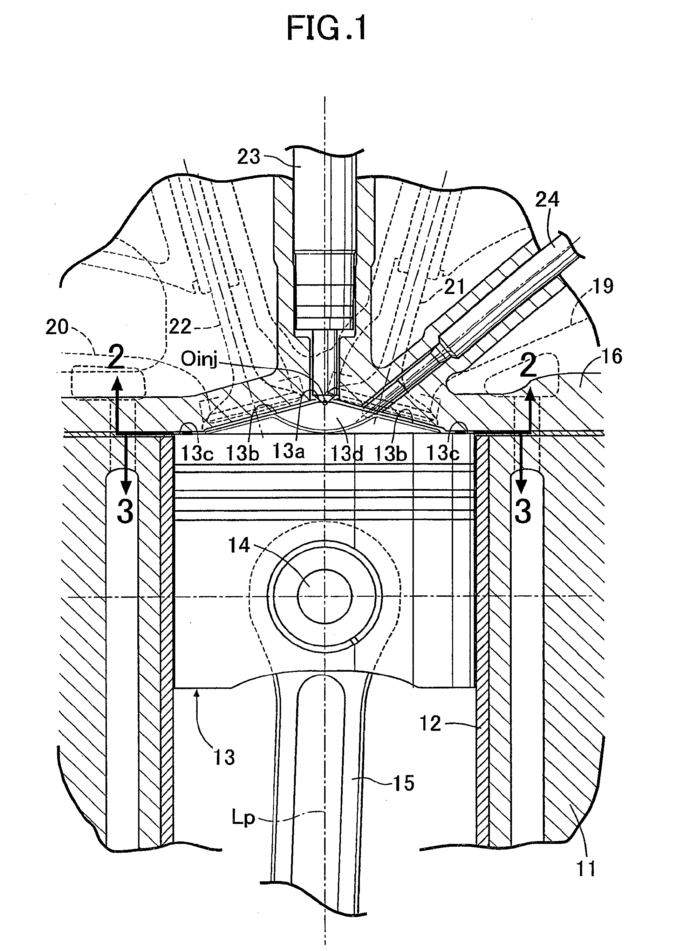

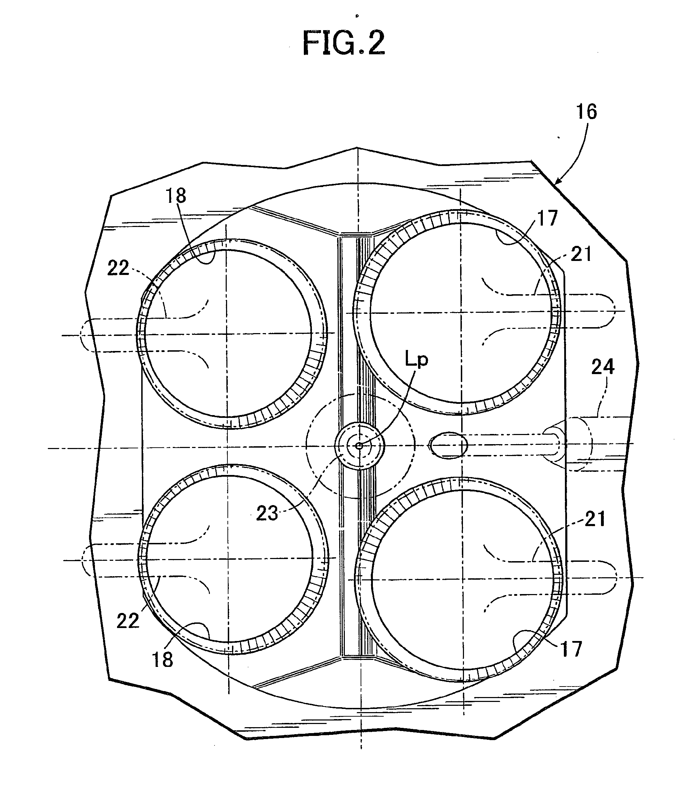

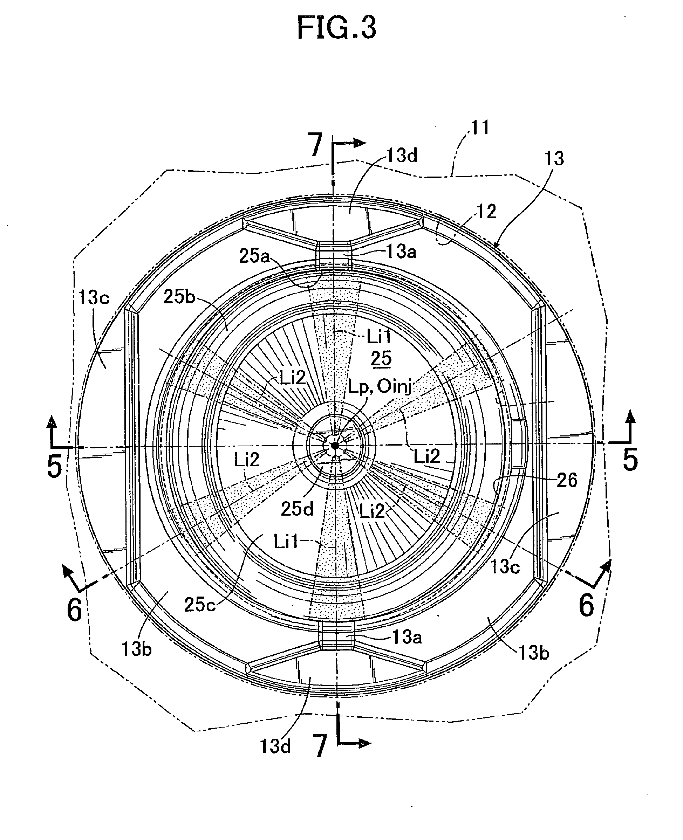

FIG. 1 to FIG. 11 show a mode for carrying out the present invention.

As shown in FIG. 1 to FIG. 3, a direct fuel-injection type diesel engine includes a piston 13 slidably fitted into a cylinder 12 formed in a cylinder block 11, and the piston 13 is connected to a crankshaft (not illustrated) via a piston pin 14 and a connecting rod 15. Two intake valve holes 17 and 17 and two exhaust valve holes 18 and 18 facing a top face of the piston 13 open in a lower face of a cylinder head 16, which is joined to an upper face of the cylinder block 11, an intake port 19 communicates with the intake valve holes 17 and 17, and an exhaust port 20 communicates with the exhaust valve holes 18 and 18. The intake valve holes 17 and 17 are opened and closed by intake valves 21 and 21, and the exhaust valve holes 18 and 18 are opened and closed by exhaust valves 22 and 22. A fuel injector 23 is provided so as to be positioned on a piston central axis Lp, and a glow plug 24 is provided so as to be adjacent to the fuel injector 23.

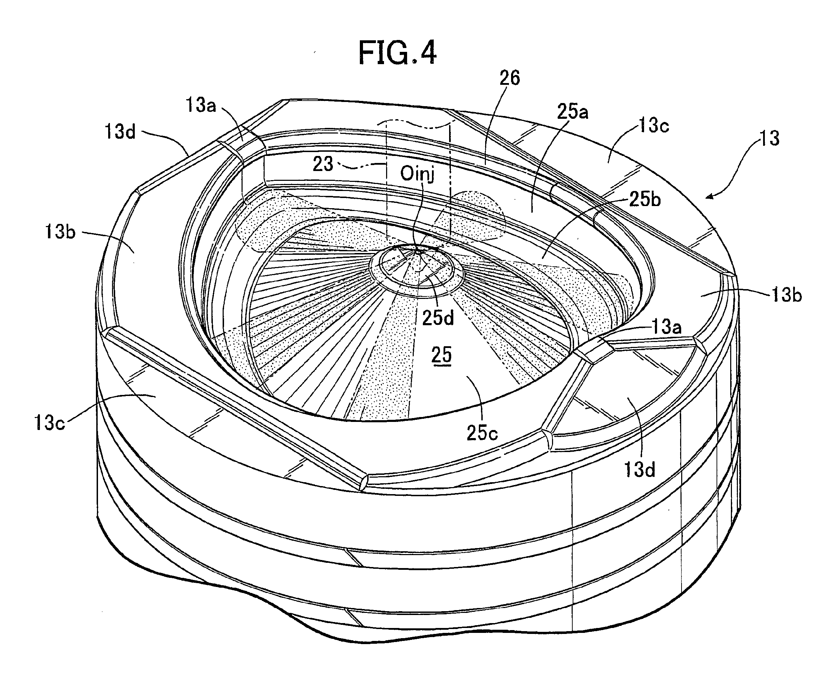

As is clear from FIG. 1 and FIG. 4, the top face of the piston 13 and the lower face of the cylinder head 16 facing it are not flat but are inclined in a pentroof shape with a triangular cross-section, and due to this shape it is possible to reduce the curvature of the intake port 19 and the exhaust port 20, ensure a diameter for the intake valve holes 17 and 17 and the exhaust valve holes 18 and 18, and enhance the intake efficiency and the exhaust efficiency.

A cavity 25 with the piston central axis Lp as its center is recessed in the top face of the piston 13. Formed radially outside the cavity 25 are a pair of inclined faces 13b and 13b inclined downward to the intake side and the exhaust side from top portions 13a and 13a extending linearly parallel to the piston pin 14, a pair of flat faces 13c and 13c formed in the vicinity of the lower end of the inclined faces 13b and 13b so as to be perpendicular to the piston central axis Lp, and a pair of cutout portions 13d and 13d formed by cutting out opposite ends of the top portions 13a and 13a so as to be flat.

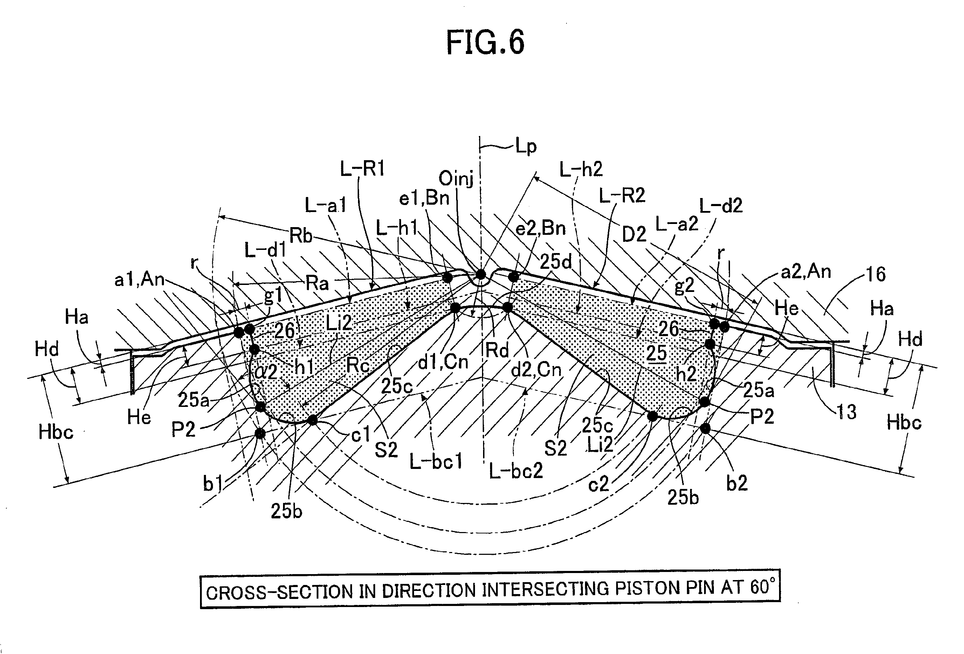

The fuel injector 23, which is disposed along the piston central axis Lp, injects fuel in six directions spaced at intervals of 60° in the circumferential direction with a fuel injection point Oinj, which is a virtual point on the piston central axis Lp, as the center. Among six fuel injection axes, two first fuel injection axes Li1 overlap the piston pin 14 when viewed in the piston central axis Lp direction, and the other four second fuel injection axes Li2 intersect the piston pin 14 direction at angles of 60°. Furthermore, when viewed in a direction perpendicular to the piston central axis Lp, the six first and second fuel injection axes Li1 and Li2 are inclined obliquely downward, the degree of downward inclination being small for the first fuel injection axes Li1 and large for the second fuel injection axes Li1 (see FIG. 6 and FIG. 7).

An injection point at which the fuel injector 23 actually injects fuel is slightly displaced radially outward from the piston central axis Lp, but the fuel injection point Oinj is defined as a point where the first and second fuel injection axes Li1 and Li2 intersect the piston central axis Lp.

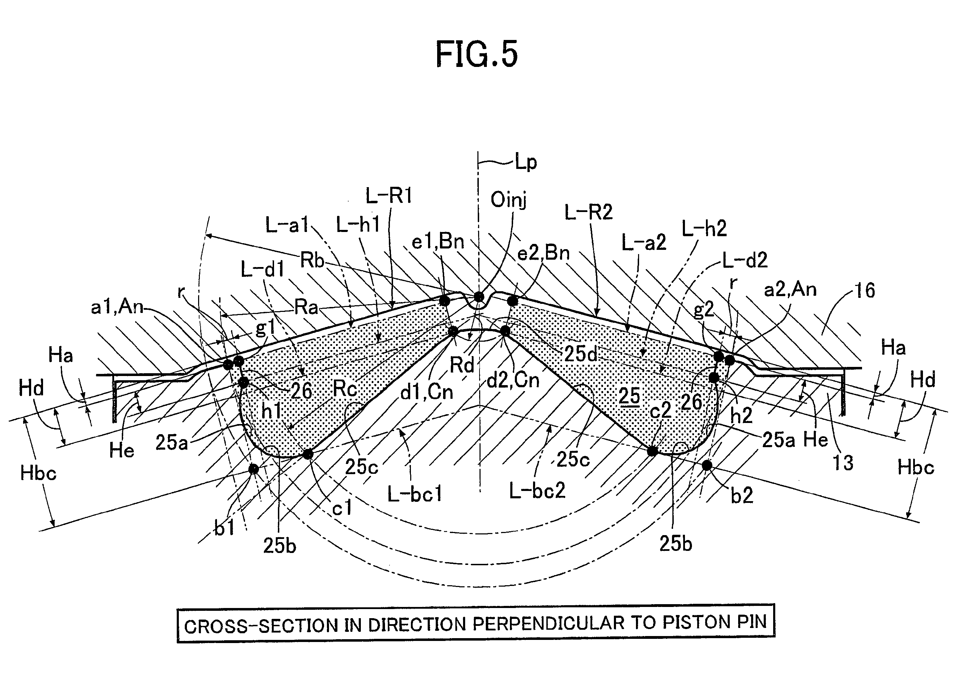

The cross-sectional shape of a cavity 25 of the invention of the prior application related to the application by the present applicant (ref. Japanese Patent Application Laid-open No. 2008-002443) is now explained in detail by reference to FIG. 5 to FIG. 7. The reason why the cross-sectional shape of the cavity 25 of the invention of the prior application is explained is that the cross-sectional shape of the cavity 25 of the invention of the present application is obtained by correcting the cross-sectional shape of the cavity 25 of the invention of the prior application and, moreover, by providing a lip part 26 so as to project from the edge of the opening of the cavity 25. FIG. 5 is a cross-section in a direction perpendicular to the piston pin 14, FIG. 6 is a cross-section in a direction that intersects the piston pin 14 at 60° (cross-section containing second fuel injection axis Li2), and FIG. 7 is a cross-section in a direction along the piston pin 14 (cross-section containing first fuel injection axis Li1).

The invention of the prior application aims to make the shape of the cavity 25 as far as possible the same for any cross-section passing through the piston central axis Lp. The cross-sectional shape of the cavity 25 is divided into two, that is, left and right portions, sandwiching the piston central axis Lp; the two portions are substantially linearly connected in the cross-section in the piston pin 14 direction in FIG. 7, but are connected in a peak shape in accordance with the pentroof shape of the piston 13 in the cross-section in a direction perpendicular to the piston pin 14 in FIG. 5 and in the cross-section in a direction that intersects the piston pin 14 at 60° in FIG. 6. Essential parts of the cross-sectional shape of the cavity 25, that is, the shaded portions in FIG. 5 to FIG. 7, are exactly the same.

As is clear from FIG. 5 to FIG. 7, the cavity 25 formed with the piston central axis Lp as the center is formed from a peripheral wall portion 25a extending linearly downward from the top face of the piston 13, a curved wall portion 25b curving in a concave shape from the lower end of the peripheral wall portion 25a toward the piston central axis Lp, a bottom wall portion 25c extending linearly obliquely upward from the radially inner end of the curved wall portion 25b toward the piston central axis Lp, and a top portion 25d connected to the radially inner end of the bottom wall portion 25c on the piston central axis Lp.

Lines extending parallel to and spaced only by a distance Ha downward from lines L-R1 and L-R2 denoting the lower face of the cylinder head 16 facing the cavity 25 are defined as piston top face baselines L-a1 and L-a2. Similarly, lines extending parallel to and spaced only by a distance Hbc downward from the lines L-R1 and L-R2 denoting the lower face of the cylinder head 16 are defined as cavity bottom face baselines L-bc1 and L-bc2, and lines extending parallel to and spaced only by a distance Hd downward from the lines L-R1 and L-R2 denoting the lower face of the cylinder head 16 are defined as cavity top portion baselines L-d1 and L-d2.

Intersection points of an arc having a radius Ra and the fuel injection point Oinj as the center with the piston top face baselines L-a1 and L-a2 are defined as a1 and a2. Similarly, intersection points of an arc having a radius Rb and the fuel injection point Oinj as the center with the cavity bottom face baselines L-bc1 and L-bc2 are defined as bland b2, intersection points of an arc having a radius Rc and the fuel injection point Oinj as the center with the cavity bottom face baselines L-bc1 and L-bc2 are defined as c1 and c2, and intersection points of an arc having a radius Rd and the fuel injection point Oinj as the center with the cavity top portion baselines L-d1 and L-d2 are defined as d1 and d2. Intersection points e1 and e2 are points at which perpendicular lines from the intersection points d1 and d2 to the piston top face baselines L-a1 and L-a2 intersect the piston top face baselines L-a1 and L-a2.

The peripheral wall portion 25a of the cavity 25 is on the straight line a1b1 or a2b2, the bottom wall portion 25c of the cavity 25 coincides with the straight line c1d1 or c2d2, and the curved wall portion 25b of the cavity 25 smoothly connects the straight line a1b1 or a2b2 and the straight line c1d1 or c2d2.

The shape of the cavity 25 is set so that the shaded cross-sectional shape defined by the intersection points a1, c1, d1, and e1 or the intersection points a2, c2, d2, and e2 is equal for any cross-section that passes through the piston central axis Lp.

The intersection points a1 and a2 correspond to a first specific point An of the present invention, the intersection points e1 and e2 correspond to a second specific point Bn of the present invention, and the intersection points d1 and d2 correspond to a third specific point Cn of the present invention.

With regard to the cross-sections that pass along the first and second fuel injection axes Li1 and Li2 shown in FIG. 6 and FIG. 7, the shaded portion in the cross-section (fuel injection cross-section S1) in the piston pin 14 direction shown in FIG. 7 and the shaded portion in the cross-section (fuel injection cross-section S2) in a direction that intersects the piston pin 14 at 60° shown in FIG. 6 have an identical shape.

In the cross-section in the piston pin 14 direction shown in FIG. 7, a point at which the first fuel injection axis Li1 intersects the cavity 25 is defined as a fuel collision point P1, and in the cross-section in a direction that intersects the piston pin 14 at 60° shown in FIG. 6 a point at which the second fuel injection axis Li2 intersects the cavity 25 is defined as a fuel collision point P2. The two fuel collision points P1 and P2 are present at the same positions of the shaded cross-sections having identical shapes. Therefore, the position of the fuel collision point P2 is lower than the position of the fuel collision point P1, and the second fuel injection axis Li2 extending from the fuel injection point Oinj injects fuel further downward than the first fuel injection axis Li1.

A distance D1 from the fuel injection point Oinj to the fuel collision point P1 is substantially the same as a distance D2 from the fuel injection point Oinj to the fuel collision point P2. Furthermore, a fuel collision angle α1 formed by a tangent to the cavity 25 at the fuel collision point P1 and the first fuel injection axis Li1 is substantially the same as a fuel collision angle α2 formed by a tangent to the cavity 25 at the fuel collision point P2 and the second fuel injection axis Li2.

As hereinbefore described, in accordance with the invention of the prior application, with regard to any cross-section that passes through the piston central axis Lp, the cross-sectional shapes of the cavity 25, excluding a very small part in the vicinity of the fuel injection point Oinj (region surrounded by intersection points e1, d1, d2, and e2), are formed so as to be identical. In particular, with regard to the two cross-sections containing the first and second fuel injection axes Li1 and Li2 (see FIG. 6 and FIG. 7), since the cross-sectional shapes of the cavity 25 are formed so as to be identical and, moreover, the distances D1 and D2 from the fuel injection point Oinj to the fuel collision points P1 and P2 in the two cross-sections are set so as to be substantially equal and the fuel collision angles α1 and α2 at the fuel collision points P1 and P2 are set so as to be substantially equal, the conditions in which air and fuel are mixed in each portion of the cavity 25 are made uniform in the circumferential direction, thus improving the combustion conditions for the gas mixture, increasing the engine output, and reducing harmful exhaust substances.

Furthermore, in the cross-sections in which the top face of the piston 13 is inclined as shown in FIG. 5 and FIG. 6, since the angle formed by the edge of the opening of the cavity 25 (portion at intersection point a2) is not made acute compared with a case in which the top face of the piston 13 is flat as shown in FIG. 7, it is possible to reduce the thermal load of this portion and improve the heat resistance.

In the invention of the prior application, the cross-sectional shapes of the cavity 25 in FIG. 5 to FIG. 7 are exactly the same in the shaded portions, but vary in the white regions surrounded by the intersection points e1, d1, d2, and e2 in the vicinity of the fuel injection point Oinj. The reason therefor is that two portions sandwiching the piston central axis Lp in the cross-sectional shape of the cavity 25 are connected in a substantially straight line in the cross-section in the piston pin 14 direction in FIG. 7, but in the cross-section in a direction perpendicular to the piston pin 14 in FIG. 5 and in the cross-section in a direction intersecting the piston pin 14 at 60° in FIG. 6, they are connected in a peak shape in accordance with the pentroof shape of the piston 13. The area of the white region surrounded by the intersection points e1, d1, d2, and e2 is the largest in the cross-section in the piston pin 14 direction in FIG. 7, decreases in the cross-section in the direction intersecting the piston pin 14 at 60° in FIG. 6, and further decreases in the cross-section in the direction perpendicular to the piston pin 14 in FIG. 5.

This embodiment makes the conditions in which air and fuel are mixed more uniform in cross-sections in all directions of the cavity 25 by correcting, with as a reference the cross-sectional shape (see FIG. 7) of the cavity 25 in the piston pin 14 direction in which the area of the white region surrounded by the intersection points e1, d1, d2, and e2 is a maximum, the cross-sectional shape in other directions so that it enlarges (that is, increasing in directions in which the depth of the cavity 25 increases), thus compensating for the difference in area between the white regions surrounded by the intersection points e1, d1, d2, and e2.

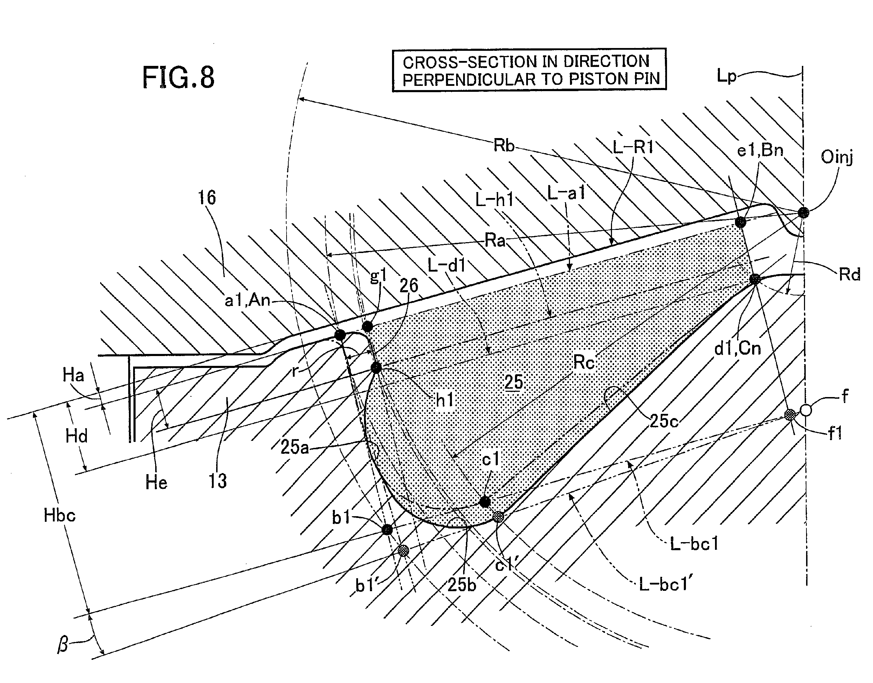

FIG. 8 explains a method for correcting the cross-sectional shape of the cavity 25 in the direction perpendicular to the piston pin 14 in FIG. 5; the shape denoted by a broken line corresponds to the invention of the prior application, and the shape denoted by a solid line corresponds to the present embodiment.

Correction of the cross-sectional shape of the cavity 25 in accordance with the present embodiment is carried out by moving the positions of the intersection point bland the intersection point c1 downward to an intersection point b1' and an intersection point c1' respectively so as to increase the area of the shaded portion.

First, an intersection point between the cavity bottom face baseline L-bc1 and a downward extension of the straight line e1d1 is defined as fl. Subsequently, the cavity bottom face baseline L-bc1, which passes through the intersection point f1, is rotated downward only by a predetermined angle β with the intersection point f1 as the center, and a new cavity bottom face baseline L-bc1' is thus set. Subsequently, an intersection point between the arc having a radius Rb with the fuel injection point Oinj as the center and the new cavity bottom face baseline L-bc1' is defined as the above b1', and an intersection point between the arc having a radius Rc with the fuel injection point Oinj as the center and the new cavity bottom face baseline L-bc1' is defined as the above c1'

In the cross-sectional shape of the cavity 25 after correction, the peripheral wall portion 25a of the cavity 25 is on the straight line a1b1', the bottom wall portion 25c of the cavity 25 coincides with the straight line c1'd1, and the curved wall portion 25b of the cavity 25 smoothly connects the straight line a1b1' and the straight line c1'd1.

In addition, an intersection point between the cavity bottom face baseline L-bc1 and the piston central axis Lp is defined as f, and by rotating the cavity bottom face baseline L-bc1 downward by the predetermined angle β with the intersection point f as the center, the new cavity bottom face baseline L-bc1' may be determined.

Although, of the path AnCn on an inner wall face of the cavity 25, a section from the lowest part of the path AnCn to the third specific point Cn is close to the second fuel injection axis Li2, by varying the shape of the section in this way it is possible to suppress attachment of fuel to the inner wall face of the cavity 25, thus preventing degradation of combustion.

In this embodiment, net mean effective pressure, NMEP, is improved by on the order of 2% relative to the invention of the prior application in a state in which soot is not generated.

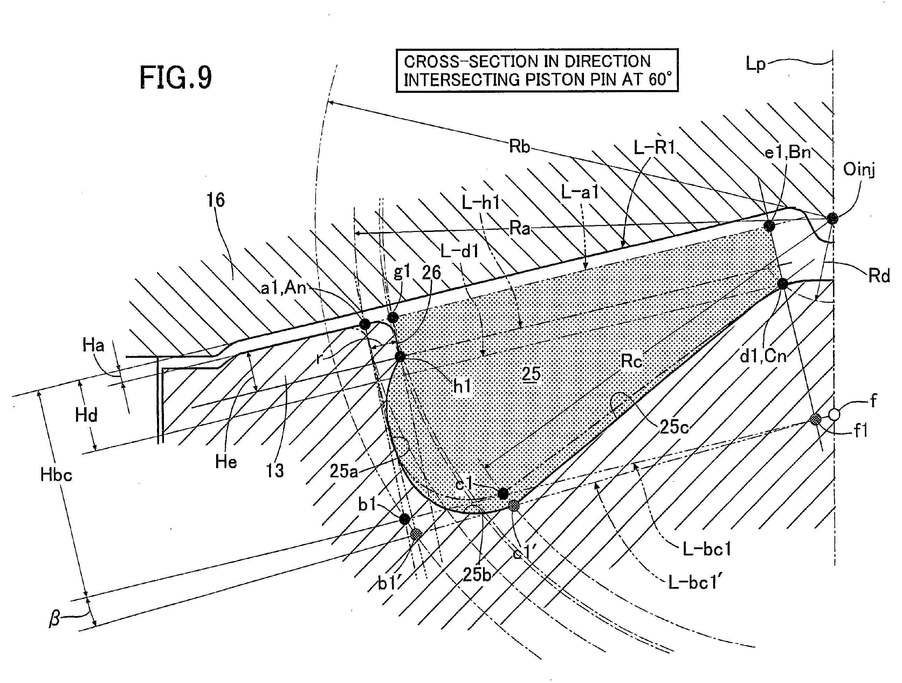

FIG. 9 explains a method for correcting the cross-sectional shape of the cavity 25 in a direction that intersects the piston pin 14 at 60° in FIG. 6; the shape denoted by a broken line corresponds to the invention of the prior application, and the shape denoted by a solid line corresponds to the present embodiment.

Since, compared with the difference in white area surrounded by the intersection points e1, d1, d2, and e2 between FIG. 7 (piston pin 14 direction) and FIG. 5 (direction perpendicular to the piston pin 14), the difference in this area between FIG. 7 (piston pin 14 direction) and FIG. 6 (direction intersecting the piston pin 14 at 60°) is small, the amount of enlargement in the cross-sectional shape of the cavity 25 in FIG. 9 (direction intersecting the piston pin 14 at 60°) is smaller than the amount of enlargement in the cross-sectional shape of the cavity 25 in FIG. 8 (direction perpendicular to the piston pin 14).

Correction of the cross-sectional shape of the cavity 25 on one side of the piston central axis Lp is explained above, and correction of the cross-sectional shape of the cavity 25 on the other side of the piston central axis Lp is carried out in exactly the same manner.

Furthermore, the annular lip part 26, which is not present in the invention of the prior application, is provided so as to project radially inward from the edge of the opening of the cavity 25 of the invention of the present application, and this lip part 26 can prevent fuel injected into the cavity 25 from spilling over. The shape of the lip part 26 is constant in the circumferential direction of the cavity 25. That is, the cross-sectional shape of the lip part 26 that is cut by any plane containing the piston central axis Lp becomes constant.

That is, as shown in FIG. 5 to FIG. 9, with regard to the shape of the lip part 26, points g1 and g2 that are spaced only by a distance r radially inward from the first specific point An on the piston top face baselines L-a1 and L-a2 are defined; furthermore, points h1 and h2 that are spaced downward only by a distance He in directions that contain points g1 and g2 and are perpendicular to the piston top face baselines L-a1 and L-a2 are defmed and, moreover, lip lower part baselines L-h1 and L-h2 that contain points h1 and h2 and are parallel to the piston top face baselines L-a1 and L-a2 are defined. The shape of the lip part 26 is determined by a line segment joining the first specific point An and the point g1, g2, a line segment joining the point g1, g2 and the point h1, h2, and a curved line smoothly joining the lip lower part baseline L-h1, L-h2 and the peripheral wall portion 25a of the cavity 25.

In order to make the cross-sectional shape of the lip part 26 smooth and nonangular, angles are rounded in areas of the points g1 and g2 and the points h1 and h2.

As hereinbefore described, in accordance with the present embodiment, since the cross-sectional shape of the lip part 26 formed at the edge of the opening of the cavity 25 is constant in the circumferential direction, the cross-sectional shape of the cavity 25 does not vary due to the lip part 26 being formed and, moreover, the thermal load imposed on the thin lip part 26 due to combustion of a gas mixture can be made constant throughout the entire region in the circumferential direction, thus enhancing the durability of the piston 13. Furthermore, the speed of cooling of molten metal in the lip part 26 during casting of the piston 13 can be made uniform, thus improving the precision of casting.

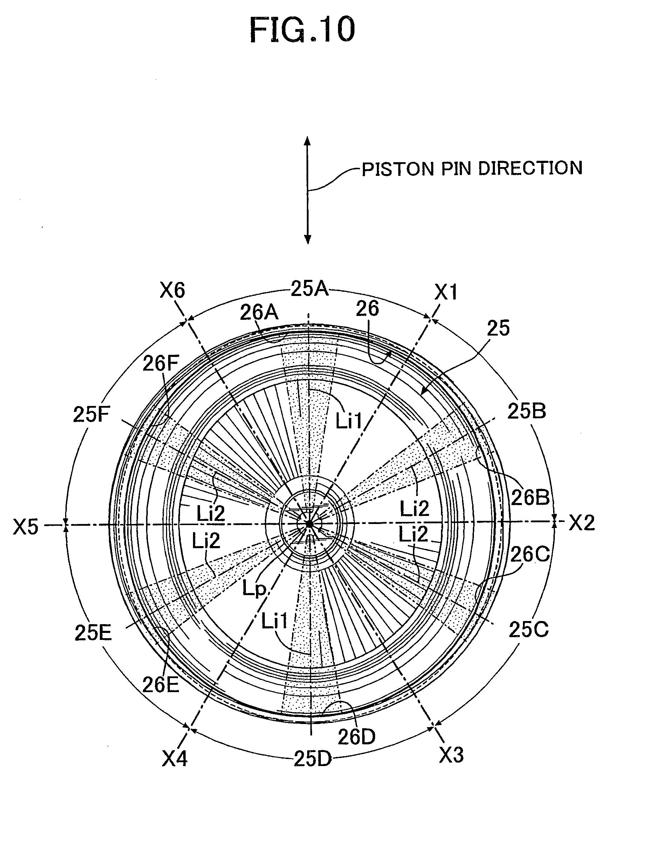

FIG. 10 is a view for explaining, from another viewpoint, correction of the cross-sectional shape of the cavity 25 in accordance with the present embodiment.

In this figure, six half planes X1 to X6 extend radially from the piston central axis Lp passing through the center of the cavity 25. Angles (included angles) formed by two adjacent half planes X1 to X6 are all 60°, and six bisectors that bisect spaces between the half planes X1 to X6 overlap the first and second fuel injection axes Li1 and Li2 when viewed in the piston central axis Lp direction. The cavity 25 is divided into six virtual cavity sections 25A to 25F by the six half planes X1 to X6 and, in accordance with this embodiment, due to the above-mentioned correction of the cross-sectional shape of the cavity 25, it is theoretically possible to set the volumes of the six cavity sections 25A to 25F so as to be identical. Furthermore, the lip part 26 is divided into six virtual lip part sections 26A to 26F by the six half planes X1 to X6, and in accordance with the present embodiment the cross-sectional shapes of the six lip part sections 26A to 26F can be set so as to be identical. However, it is not necessary to set the volumes of the six cavity sections 25A to 25F so as to be completely identical; even if they are only set so as to be substantially identical it is possible to make the conditions in which fuel is mixed more uniform in the circumferential direction compared with the invention of Patent Document 1 or the invention of the prior application. Specifically, by making the variation in volume of the six cavity sections 25A to 25F, that is, the difference in volume between the maximum volume cavity section and the minimum volume cavity section, small compared with the invention of Patent Document 1 or the invention of the prior application, it is possible to make the conditions in which fuel is mixed in the circumferential direction more uniform. Furthermore, it is not necessary to make the cross-sectional shapes of the six virtual lip part sections 26A to 26F completely identical, and from another viewpoint desired operational effects can be achieved by setting the shape of an outer wall face of the lip part 26 so that the volumes of the six virtual lip part sections 26A to 26F are substantially equal.

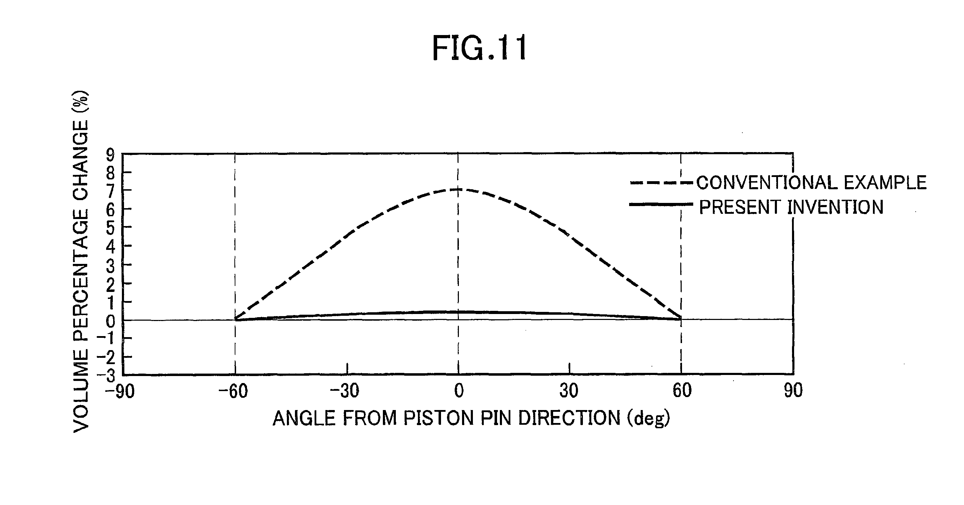

FIG. 11 shows the percentage change in volume of the cavity section when the direction of the cavity section (i.e. direction of the bisector of the included angle of the cavity section) is moved in a range of 60° to both left and right of the piston central axis Lp with the piston pin 14 direction as a reference (0°). The broken line corresponds to the conventional example (the invention of Patent Document 1), and the solid line corresponds to the present embodiment.

In all cases, the point when the direction of the bisector of the included angle of the cavity section intersects the piston pin 14 direction at 60° (ref. cavity sections 25B, 25C, 25E, and 25F in FIG. 10) is taken as a reference, and the percentage change at that point is defined as 0%. In the conventional example shown by the broken line, when the direction of the bisector of the included angle of the cavity section coincides with the piston pin 14 direction (ref. cavity sections 25A and 25D in FIG. 10), the percentage change is a maximum of on the order of 7%, but in the embodiment shown by the solid line, although the percentage change is a maximum at the same position, the value is greatly reduced and is suppressed to only 0.5%.

An embodiment of the present invention is explained above, but the present invention may be modified in a variety of ways as long as the modifications do not depart from the scope thereof.

For example, in the embodiment, the number of virtual cavity sections 25A to 25F and lip part sections 26A to 26F is set at six (N = 6), but the number of cavity sections 25A to 25F and lip part sections 26A to 26F may be two or more (N is a whole number of 2 or more).

In this case, the number of cavity sections 25A to 25F and the number of fuel injection axes do not necessarily coincide with each other, but by making them coincide with each other one fuel injection axis corresponds to one cavity section 25A to 25F, and the conditions in which fuel is mixed can be made more uniform in the circumferential direction. Making the bisectors of the included angles of the cavity sections 25A to 25F coincide with fuel injection axes allows the fuel injection axis to be positioned at the center of each of the cavity sections 25A to 25F, thereby making the conditions in which fuel is mixed more uniform.

Furthermore, in the embodiment, the volume of the virtual cavity sections 25A to 25F does not include the volume of a portion sandwiched between the lower face of the cylinder head 16 and the top face of the piston 13 when at top dead center, and is defined as the volume up to the edge of the opening of the cavity 25 (that is, the volume below the piston top face baselines L-a1 and L-a2), but even if a volume including this portion is defined as the volume of the virtual cavity sections 25A to 25F, the same operational effects can be exhibited.

Moreover, in the embodiment, an explanation is given for a diesel engine, but the invention of the present application is not limited to a diesel engine and may be applied to any type of engine in which fuel is directly injected into a combustion chamber.

## Claims

1. A direct fuel-injection engine comprising a piston (13) having a top face with a height in a piston central axis (Lp) direction that varies in a circumferential direction, a cavity (25) recessed in a central part of the top face of the piston (13), a lip part (26) projecting in an annular manner from an edge of an opening of the cavity (25) toward the piston central axis (Lp) so as to reduce a diameter of the opening of the cavity (25), and a fuel injector (23) for injecting fuel into the cavity (25),
wherein the shape of an outer wall face of the lip part (26) is set so that, with N as a whole number of 2 or more, the lip part (26) is divided into N virtual lip part sections (26A to 26F) by the outer wall face of the lip part (26) and N half planes (X1 to X6) extending radially from the piston central axis (Lp) and having equal included angles,
wherein the shape of an inner wall face of the cavity (25) is set so that, with N as a whole number of 2 or more, when the cavity (25) is divided into N virtual cavity sections (25A to 25F) by the inner wall face of the cavity (25) and N half planes (X1 to X6) extending radially from the piston central axis (Lp) and having equal included angles, volumes of the virtual cavity sections (25A to 25F) are substantially equal,
wherein the fuel injector (23) comprises a plurality of fuel injection axes (Li1, Li2) spaced in the circumferential direction,
a cross-section of the cavity (25) passing through an nth fuel injection axis (Li1, Li2) is defined as a fuel injection cross-section Sn,
an intersection point of the fuel injection cross-section Sn with the edge of the opening of the cavity (25) is defined as a first specific point An,
a second specific point Bn is present on a line that passes through the first specific point An and is parallel to a lower face of a cylinder head (16) in the fuel injection cross-section Sn,
a third specific point Cn is present on a bottom wall portion (25c) of the cavity (25) in the fuel injection cross-section Sn,
the second specific point Bn is at a position closer to the piston central axis (Lp) than the first specific point An,
the third specific point Cn is at a position closer to the piston central axis (Lp) than the position of the maximum outer diameter of the bottom wall portion (25c) of the cavity (25),
a cross-sectional shape surrounded by a path AnBn connecting the first and second specific points An and Bn by a line along the lower face of the cylinder head (16) in the fuel injection cross-section Sn, a path AnCn connecting the first and third specific points An and Cn along a wall face of the cavity (25) in the fuel injection cross-section Sn, and a path BnCn connecting the second and third specific points Bn and Cn by the shortest straight line, which is substantially equal for each fuel injection cross-section Sn, is defined as a reference cross-sectional shape,
the volume of each virtual cavity section (25A to 25F) is made substantially equal by varying the shape of the inner wall face of the cavity (25) so that the reference cross-sectional shape enlarges for the fuel injection cross-section Sn passing through a fuel injection axis (Li1, Li2) that is present in a direction where the height, in the piston central axis (Lp) direction, of the top face of the piston (13) is low, and
a point g1, g2 that is spaced only by a distance r toward the second specific point Bn side from the first specific point An on the path AnBn in the fuel injection cross section Sn and a point h1, h2 that is spaced only by a distance He toward the bottom wall portion (25c) of the cavity (25) from the point g1, g2 in a direction that is perpendicular to the path AnBn are defined, and the shape of the lip part (26) is determined by a line segment joining the first specific point An and the point g1, g2, a line segment joining the point g1, g2 and the point h1, h2,
**characterized in that** volumes of the virtual lip part sections (26A to 26F) are substantially equal, and
that a curved line smoothly joins the point h1, h2 and a peripheral wall portion (25a) of the cavity (25), and
wherein angles are rounded in areas of the points g1 and g2 and the points h1 and h2.

2. The direct fuel-injection engine according to claim 1, wherein the cross-sectional shape of the lip part (26) in a given half plane extending radially from the piston central axis (Lp) is made substantially equal throughout an entire region in a circumferential direction of the lip part (26).

## Patentansprüche

1. Kraftstoffdirekteinspritzmotor, welcher aufweist: einen Kolben (13) mit einer Oberseite, deren Höhe in einer Kurvenmittelachs-(Lp)-Richtung sich in Umfangsrichtung verändert; eine Mulde (25), die in einen mittleren Teil der Oberseite des Kolbens (13) vertieft ist, ein Lippenteil (26), das ringförmig von einem Rand einer Öffnung der Mulde (25) zur Kolbenmittelachse (Lp) hin vorsteht, um einen Durchmesser der Öffnung der Mulde (25) zu reduzieren; und einen Kraftstoffinjektor (23) zum Injizieren von Kraftstoff in die Mulde (25),
wobei die Form einer Außenwandfläche des Lippenteils (26) derart gesetzt ist, dass, wenn N eine ganze Zahl von 2 oder mehr ist, das Lippenteil (26) durch eine Außenwandfläche des Lippenteils (26) und N Halbebenen (X1 bis X6), die sich radial von der Kolbenmittelachse (Lp) erstrecken und gleiche Einschlusswinkel haben, in N virtuelle Teilabschnitte (26A bis 26F) unterteilt ist,
wobei die Form einer Innenwandfläche der Mulde (25) so gesetzt ist, dass, wenn N eine ganze Zahl von 2 oder mehr ist, wenn die Mulde (25) durch die Innenwandfläche der Mulde (25) und N Halbebenen (X1 bis X6), die sich radial von der Kolbenmittelachse (Lp) erstrecken und gleiche Einschlusswinkel haben, in N virtuelle Muldenabschnitte (25A bis 25F) unterteilt ist, Volumina der virtuellen Muldenabschnitte (25A bis 25F) im Wesentlichen gleich sind,
wobei der Kraftstoffinjektor (23) eine Mehrzahl von in der Umfangsrichtung beabstandeten Kraftstoffeinspritzachsen (Li1, Li2) aufweist,
ein Querschnitt der Mulde (25), der durch eine nth Kraftstoffeinspritzachse (Li1, Li2) hindurchgeht, als Kraftstoffeinspritzquerschnitt Sn definiert ist,
ein Schnittpunkt des Kraftstoffeinspritzquerschnitts Sn mit dem Rand der Öffnung der Mulde (25) als erster spezifischer Punkt An definiert ist, ein zweiter spezifischer Punkt Bn auf einer Linie, die durch den ersten spezifischen Punkt An hindurchgeht und parallel zu einer Unterseite eines Zylinderkopfs (16) ist, in dem Kraftstoffeinspritzquerschnitt Sn liegt,
ein dritter spezifischer Punkt Cn auf einem Bodenwandabschnitt (25c) der Mulde (25) in dem Kraftstoffeinspritzquerschnitt Sn liegt,
der zweite spezifische Punkt Bn näher an der Kolbenmittelachse (Lp) angeordnet ist als der erste spezifische Punkt (An),
der dritte spezifische Punkt Cn näher an der Kolbenmittelachse (Lp) angeordnet ist als die Position des maximalen Außendurchmessers des Bodenwandabschnitts (25c) der Mulde (25),
eine Querschnittsform, die von einem Weg AnBn, der die ersten und zweiten spezifischen Punkte An und Bn durch eine Linie entlang der Unterseite des Zylinderkopfs (16) in dem Kraftstoffeinspritzquerschnitt Sn verbindet, einem Weg AnCn, der die ersten und dritten spezifischen Punkte An und Cn entlang einer Wandfläche der Mulde (25) in dem Kraftstoffeinspritzquerschnitt Sn verbindet, und einem Weg BnCn, der die zweiten und dritten spezifischen Punkte Bn und Cn mit der kürzesten geraden Linie verbindet, die im Wesentlichen für jeden Kraftstoffeinspritzquerschnitt Sn gleich ist, umgeben ist, als Referenzquerschnittsform definiert ist,
das Volumen von jedem virtuellen Muldenabschnitt (25A bis 25F) im Wesentlichen gleich gemacht wird, indem die Form der Innenwandfläche der Mulde (25) so verändert wird, dass die Referenzquerschnittsform für den Kraftstoffeinspritzquerschnitt Sn, der durch eine Kraftstoffeinspritzachse (Li1, Li2) hindurchgeht, die in einer Richtung liegt, wo die Höhe, in der Kolbenmittelachs-(Lp)-Richtung der Oberseite des Kolbens (13) niedrig ist, größer wird, und
ein Punkt g1, g2, der nur um einen Abstand r zum zweiten spezifischen Punkt Bn hin vom ersten spezifischen Punkt An auf dem Weg AnBn in dem Kraftstoffeinspritzquerschnitt Sn beabstandet ist, und ein Punkt h1, h2, der nur um einen Abstand He zum Bodenwandabschnitt (25c) der Mulde (25) vom Punkt g1, g2 in einer Richtung, die senkrecht zum Weg AnBn ist, beabstandet ist, definiert sind, und die Form des Lippenteils (26) durch ein Liniensegment, das den ersten spezifischen Punkt An und den Punkt g1, g2 verbindet, und ein Liniensegment, das den Punkt g1, g2 und den Punkt h1, h2 verbindet, bestimmt ist,
**dadurch gekennzeichnet, dass** die Volumina der virtuellen Lippenteilabschnitte (26A bis 26F) im Wesentlichen gleich sind, und
dass die gekrümmte Linie dem Punkt h1, h2 und einen Umfangswandabschnitt (25a) der Mulde (25) glattgängig verbindet, und
wobei Winkel in Bereichen der Punkte g1 und g2 und der Punkte h1 und h2 gerundet sind.

2. Der Kraftstoffdirekteinspritzmotor nach Anspruch 1, wobei die Querschnittsform des Lippenteils (26) in einer gegebenen Halbebene, die sich radial von der Kolbenmittelachse (Lp) erstreckt, über einen Gesamtbereich in Umfangsrichtung des Lippenteils (26) im Wesentlichen gleich gemacht ist.

## Revendications

1. Un moteur à injection directe comprenant un piston (13) possédant une face supérieure avec une hauteur dans la direction de l'axe central du piston (Lp) qui varie en direction circonférentielle, une cavité (25) creusée dans une partie centrale de la face supérieure du piston (13), une partie en lèvre (26) débordant de manière annulaire d'un bord d'une ouverture de la cavité (25) vers l'axe central du piston (Lp) de manière à réduire un diamètre de l'ouverture de la cavité (25) et un injecteur de carburant (23) pour injecter du carburant dans la cavité (25),
dans lequel la forme d'une face de la paroi externe de la partie en lèvre (26) est conçue de telle sorte que, N étant un nombre entier de 2 ou plus, la partie en lèvre (26) est divisée en N sections virtuelles de la partie en lèvre (26A à 26F) par la face de la paroi externe de la partie en lèvre (26) et N demi-plans (X1 à X6) s'étendant radialement à partir de l'axe central du piston (Lp) et possédant des angles inclus égaux,
dans lequel la forme d'une face de la paroi interne de la cavité (25) est conçue de telle sorte que, N étant un nombre entier de 2 ou plus, lorsque la cavité (25) est divisée en N sections virtuelles de cavité (25A à 25F) par la face de la paroi interne de la cavité (25) et N demi-plans (X1 à X6) s'étendant radialement à partir de l'axe central du piston (Lp) et possédant des angles inclus égaux, les volumes des sections virtuelles de cavité (25A à 25F) sont globalement égaux,
dans lequel l'injecteur de carburant (23) comprend plusieurs axes d'injection de carburant (Li1, Li2) espacés en direction circonférentielle,
une section transversale de la cavité (25) passant par un énième axe d'injection de carburant (Li1, Li2) est définie comme une section transversale d'injection de carburant Sn,
un point d'intersection de la section transversale d'injection de carburant Sn avec le bord de l'ouverture de la cavité (25) est défini comme un premier point spécifique An,
un deuxième point spécifique Bn est présent sur une ligne qui traverse le premier point spécifique An et est parallèle à une face inférieure d'une tête de cylindre (16) dans la section transversale d'injection de carburant Sn,
un troisième point spécifique Cn est présent sur une partie de paroi de fond (25c) de la cavité (25) dans la section transversale d'injection de carburant Sn,
le deuxième point spécifique Bn se trouve dans une position plus proche de l'axe central du piston (Lp) que le premier point spécifique An,
le troisième point spécifique Cn se trouve dans une position plus proche de l'axe central du piston (Lp) que la position du diamètre extérieur maximum de la partie de paroi de fond (25c) de la cavité (25),
une forme en section transversale entourée par une voie AnBn reliant les premier et deuxième points spécifiques An et Bn par une ligne le long de la face inférieure de la tête de cylindre (16) dans la section transversale d'injection de carburant Sn, une voie AnCn reliant les premier et troisième points spécifiques An et Cn le long d'une face de paroi de la cavité (25) dans la section transversale d'injection de carburant Sn et une voie BnCn reliant les deuxième et troisième points spécifiques Bn et Cn par la ligne droite la plus courte, qui est globalement égale pour chaque section transversale d'injection de carburant Sn, est définie comme une forme en section transversale de référence,
le volume de chaque section de cavité virtuelle (25A à 25F) est globalement égal en faisant varier la forme de la face de paroi interne de la cavité (25) de telle sorte que la forme de référence en section transversale s'agrandisse pour la section transversale d'injection de carburant Sn qui passe par un axe d'injection de carburant (Li1, Li2) qui est présent dans une direction dans laquelle la hauteur, dans la direction de l'axe central du piston (Lp), de la face supérieure du piston (13) est basse et
un point g1, g2 qui est espacé seulement d'une distance r vers le côté du deuxième point spécifique Bn du premier point spécifique An sur la voie AnBn dans la section transversale d'injection de carburant Sn et un point h1, h2 qui est espacé seulement d'une distance He de la partie de paroi de fond (25c) de la cavité (25) à partir du point g1, g2 dans une direction qui est perpendiculaire à la voie AnBn sont définis et la forme de la partie en lèvre (26) est déterminée par un segment linéaire reliant le premier point spécifique An et les points g1, g2, un segment linéaire reliant le point g1, g2 et le point h1, h2,
**caractérisé en ce que** les volumes des sections virtuelles de la partie en lèvre (26A à 26F) sont globalement égaux et
qu'une ligne incurvée relie simplement les points h1, h2 et une partie de paroi périphérique (25a) de la cavité (25) et
dans lequel les angles sont arrondis dans les zones des points g1 et g2 et des points h1 et h2.

2. Le moteur à injection directe selon la revendication 1, dans lequel la forme en section transversale de la partie de lèvre (26) dans un demi-plan donné s'étendant radialement à partir de l'axe central du piston (Lp) est globalement égale dans une région complète dans une direction circonférentielle de la partie de lèvre (26).
